# EUROPEAN PATENT SPECIFICATION

(11) **EP 3 017 907 B1**
(45) Date of publication and mention of the grant of the patent: **04.09.2019**
(21) Application number: 14004091.6
(22) Date of filing: 04.12.2014
(51) Int. Cl.: B23Q 1/00, B23Q 11/10, B23B 31/107

(54) **Clamping device for the supply of process liquids to drill body**
Spannvorrichtung zum Zuführen von Prozessflüssigkeiten zu einem Bohrkörper
Dispositif de serrage pour l'alimentation de liquides de traitement pour corps de foret

(30) Priority: 07.11.2014 CZ 20140767
(43) Date of publication of application: 11.05.2016
(73) Proprietor: Vysoká Skola Bánská - Technická Univerzita Ostrava, 708 33 Ostrava-Poruba (CZ)
(72) Inventor: Mrkvica, Ivan, CZ-70030 Ostrava - Výskovice (CZ); Petru, Jana, CZ-70800 Ostrava Poruba (CZ); Zlámal, Tomás, CZ-77900 Olomouc (CZ); Cep, Robert, CZ-70800 Ostrava Poruba (CZ); Pagác, Marek, CZ-79201 Bruntál (CZ)
(74) Representative: Kendereski, Dusan

(56) References cited:
- EP-A2- 0 369 154
- DE-B- 1 247 808
- JP-A- H04 183 555
- JP-U- S6 423 338
- JP-U- S58 169 939
- JP-U- S61 178 651
- US-A- 2 886 346
- US-A- 2 937 029
- US-A- 4 557 643

## Description

### Field of the Invention

The invention relates to the clamping device for the supply of process liquids to a body of a drill, especially for the deep hole drilling, which is mobile and can be used for various machines allowing rotary movement of the tool around the horizontal axis.

### Background of the Invention

Deep hole drilling is a specific method requiring the presence of a process medium, which participates not only in the cooling of tool cutting edges, but also in the chip removal at the hard to reach places.

Process liquids are delivered to the place of the cut in various ways. It can be achieved by an overpressure using a device, which is connected with a workpiece and sealed with the pressure source, and through which is the process liquid distributed to the space between a tool and a hole (BTA-system). This method is expensive and applicable only for a certain type of machine. The requirement for the liquid to be delivered to the inside of the tool during its rotation results in another complication.

The advanced solution presents the process liquid supply into the cavity in a drill body for deep holes using a special device, which supplies this liquid through the interconnection channel through the spindle, tool holder, and the tool to the place of the machining. The drawback of this solution is the necessity of application of the drill for deep holes on the said special device, of which the acquisition costs are substantially higher than of universal machines with horizontal rotation axis without the liquid supply using the spindle.

This type of the solution is, for example, disclosed in the Czech patent application no. 1988-2233, which presents a cooling device for drilling and boring machine tools. It is provided with a single supply of coolant for the optional external cooling of the nozzle or for the internal cooling through an axial opening in the tool. The patent application no. US 2011052338 discloses a device for hole drilling using a specially adapted machine. A twist drill with a longitudinal channel for process liquid supply to the cutting edges is covered for hole drilling. Clamping of the tool is realized using an union nut into the socket body, which delivers the cutting liquid. The German patent application DE 3702216 discloses a device for process liquid supply, which is fixedly positioned on the work spindle of the machine tool so as the rotating tools could be clamped in the spindle with a clamping cone. The runner provided with an internal toothing and a single- or multi-start outer thread, together with the coolant ring constitute a tube pump, wherein the runner using the gear placed in the coolant ring, together with the base body constitute the ring gear. In the Czech patent application no. 1998-472 the disclosure of the invention provides the method and the device for the fluid mixture supply from at least two different components from a stationary to rotary machine component. The device allows setting of an optional ratio of the quantity of the individual components. It is a sophisticated device comprising a mixing chamber and a special piping for liquid and air supply. Despite the plurality of differences, the common feature of the presented devices is thus a link to the specific machine tool and a structure of its spindle; therefore they do not have a character of mobile device. Moreover, the solutions are not universal and do not allow choosing of different tool types and clamping in the machine tool.

The Czech patent application no. 1991-176 discloses a device for coolant supply to the drill pipe, which is mounted to the clamping mount to a non-rotationally connected with the drill spindle, inside which is the cavity sealed with sealing means. On the clamping mount is pivotally arranged a body with a cavity, into which the coolant supply leads, while coolant is distributed through the radial channel and axial channel into the cavity of the drill pipe. To drain coolant leak, the device is provided with a gasket and a safety duct, which can, however, subject to wear out by the operation and therefore shorten the lifetime of the device, or lead to servicing.

The Japanese patent application no. JP H04183555 discloses a clamping device according to the preamble of claim 1. This clamping device is configured as an oiling structure for a work machine. A sleeve provided peripherally on a spindle is provided at the position opposed to the inner peripheral edge of seal bodies. The sleeve becomes free at its retraction in the axial line thereof for a spindle, and an O ring is fitted into the engagement groove provided peripherally on the circumference of the spindle, and the outer peripheral edge of the O ring is closely fitted to the inner peripheral face of the sleeve. Due to the sleeve being interposed in the state of the O ring being elastically fitted to the both between the inner peripheral face thereof and spindle, it turns integrally with the spindle. The outer peripheral face of an outside seal piece in the seal body is closely fitted to the peripheral wall of a through hole in a case, and the inner peripheral face of an inside seal piece is contacted sliably with the outer peripheral face of the sleeve. Similar clamping devices are disclosed also in JP S6423338 and US 2886346.

The patent application no. EP 0369154 describes a coolant inducing adapter. Adapter for tool with internal coolant passage is equipped with nonrotating annular gland mounted on grooved cylindrical adapter body having seals on either side of the groove and an additional backup seal in the tool holder cavity.

All these above mentioned solutions provide liquid groove which must be accompanied with gaskets to prevent ingress of a process liquid into the device. But there is always a risk of wearing the gaskets and contamination of bearings and other components. Then the gaskets and components have to be replaced.

### Summary of the Invention

The above mentioned drawbacks are to a great extent eliminated by the clamping device for the supply of process liquids to a body of a drill according to claim 1, which allows the fixation of a drill, especially the one for deep holes, with an axial internal channel in the body of the drill for the supply of process liquid, and which can be connected with the spindle of the machine tool to apply a rotational movement. The clamping device for the supply of process liquids to a body of a drill comprises a body provided at one end with a drill retaining cavity and at least one clamping hole in the body for a screw for clamping of drill, and provided at the other end with a shank for the clamping of the clamping device to a machine tool spindle, wherein the body is rotatably arranged in a cavity of a socket and fixed in the axial direction via a cover using bearings.The socket comprises a process liquid supply port connected to an annular process liquid supply groove formed on the inner side of the socket. The annular groove faces a radial channel formed in the body, to which radial channel an axial channel arranged on the axis of the clamping device is connected, the axial channel being connected with the drill retaining cavity. The socket comprises an air supply port connected via channels to two annular air supply grooves created on the inner side of the socket, which are arranged between the bearings and on the both sides of the annular process liquid supply groove. At least one recess is created around each bearing in the socket, which is connected with a radial venting channel for the removal of the excess air from the cavity of the socket.

The process liquid participating in the cooling of the cutting edges of the tools and on the chip removal is, the clamping device according to the present invention, distributed to the body and further to the cavity of the tool for deep holes via the socket, which conveys the flow of the process liquid from the reservoir to the channel system and then to the opening in the tool shank. The groove of the process liquid supply in the socket cavity relieves and secures the process liquid to flow into the supply channels in the tool for deep holes at any time along the perimeter of the cavity. The process liquid is preferably oil mist. In such case the mixture arrives already mixed in the required ration and the clamping device does not need a mixing chamber or any other special piping for the liquid and air supply.

According to a preferred embodiment of the invention a seal ring is arranged in the drill retaining cavity. The seal ring prevents the process liquid leak caused by the backlash between the drill shank for deep holes and the respective clamping hole of the clamping device body.

Besides the drill for deep holes it is possible to clamp other tools into the drill retaining cavity. The requirement is a cylindrical shank of the tool adjusted for clamping using a screw, e.g. endmill. Other tools besides the drills for deep holes (for which the invention is preferably presented) may encounter difficulties with realization of the required number of rotations for economic operation of the machining using these tools.

The body rotation in the socket is provided by two bearings. For smooth rotation of the body in the socket and for protection of bearing from clogging the device according to the present invention is provided with a pressure relief circuit and a venting circuit. Thanks to this there is no need to protect the bearings with additional gaskets, which always causes the risk of damage and needs more frequent maintenance. Compressed air supply grooves create the pressure relief circuit, which prevents the eventual leak of process liquid to the bearings. Possible overpressure of the air in the socket is decreased by the bypass venting system, which redirects the excess air pressure through the recesses around the bearings to the vent holes in the socket, and further through the venting channels out of the socket, and thus prevents the possibility of restricted operation of the whole clamping device. In a preferred embodiment of the clamping device of the invention, the process liquid supply port and air supply port are arranged in the socket so as to be diametrically opposite each other.

The main advantage of the clamping device according to the present invention is its low complexity and easy application. The proposed solution uses only one static socket, of which the inner arrangement does not need clamping with a collet, etc. There are no gaskets in the socket cavity, therefore there is no risk of their wearing during the operation and no need to replace them. Axial movement of the bearings is defined by the body shape and a pressed cover, wherein between these two and the socket vent channels are created. The pressure relief system protects the bearings from clogging by process liquid.

The proposed solution is universal, allowing drills and other tools for deep holes of various diameters and lengths to be supplied with with process liquid. It is also possible to customise the method of clamping of this device to the machine tool spindle according to actual conditions. The clamping device is mobile and may be used independently of the type of the machine tool.

### Brief Description of the Drawings

The invention will be clarified with reference to the drawings, in which Fig. 1 illustrates a whole clamping device for the supply of process liquids to a body of a drill according to the invention with clamped tool for deep holes in partial section, Fig. 2 is the clamping device according to the invention illustrated in unfolded state including the tool for deep hole drilling, Fig. 3 illustrates the clamping device according to the invention in longitudinal section, clamped in the spindle of the machine tool, Fig. 4 illustrates a detail on socket cavity in longitudinal section with particular grooves in the socket highlighted and with the channels, through which process liquid and compressed air are delivered to the tool cavity for deep holes for an implementation of function of the pressure relief circuit, Fig. 5 illustrates the socket adjustment for reducing the excess pressure in the socket and its removal outside the socket.

### Description of the Preferred Embodiments

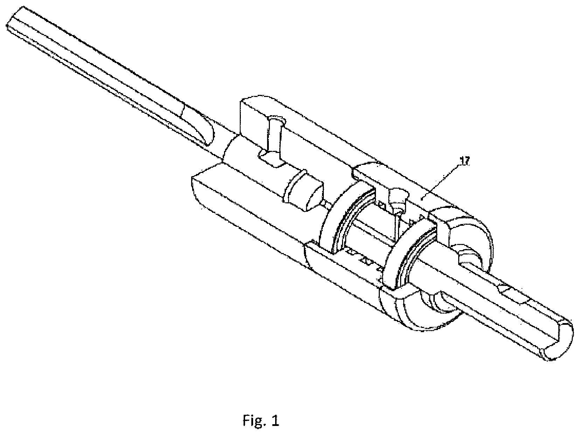

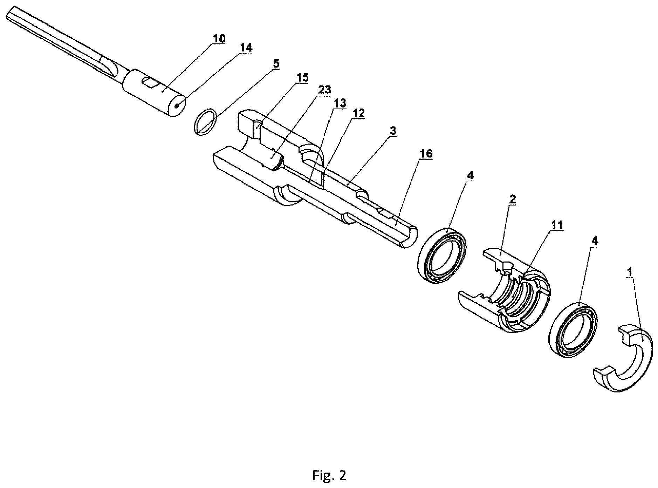

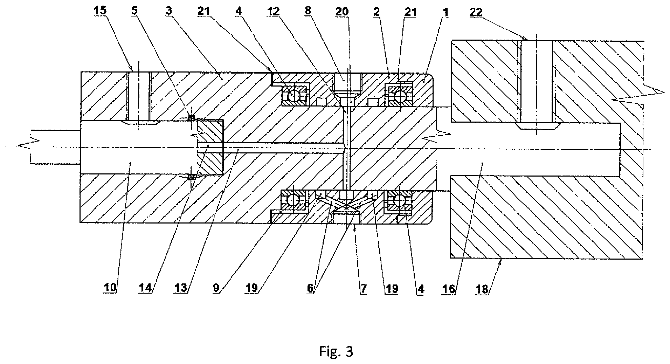

In the Fig. 1 a clamping device **17** is shown with a supply of process liquids to a body **3** of a drill **10** for deep holes consisting of a body **3**, which is rotatable arranged in a socket **2** using two bearings **4**, onto a drill **10** for deep holes is attached at one end. At the other end the body **3** is connected with a machine tool spindle **18** using a body shank **16** and spindle opening **22** for a bolt. Individual positions are clearly shown in unfolded view in the Fig. 2 and in longitudinal section in the Fig. 3. In the socket **2** body a socket cavity 11 is created, which comprises an annular process liquid supply groove **20** for process liquid supply through the channel system to the drill **10** for deep holes and to the place of the cut. The socket body 2 further comprises an air supply port **7**, which prevents the movement of process liquid to bearings **4** under a certain pressure.

In the radial direction the cavity **11** of the socket **2** is connected through the annular process liquid supply groove **20** with the radial channel **12** and axial channel **13** for the supply of process liquid. The axial channel **13** is connected to the internal channel **14** in the drill **10** for deep holes. Accidental leak of process liquid caused by the backlash between the shank of the drill **10** for deep holes and respective drill retaining cavity **23** is prevented by a seal ring **5**. A clamping hole **15** secures the clamping of the drill **10** for deep holes to the body **3.** Using this clamping hole **15** it is possible to clamp the drill **10** for deep holes behind its shank using the backlash by pressing on the opposite side of the drill retaining cavity **23** in the body **3.** The clamping hole **15** for retaining the drill may be single, or in case of larger diameter of the drill **10** for deep holes or greater length of its clamping part there may be two or more. In case of larger diameters of the drill **10**, they are provided with more clamping parts because of the necessity to transfer larger force and torque force, so as to transfer these forces using two clamping bolts without the risk of releasing of the drill **10**. In such case there will be at least two clamping holes **15** for clamping of the drill next to each other paraxially to the drill **10** of the body **3.** The arrangement of the socket **2** on the body **3** is fixed in the axial direction using a cover **1**. The body **3** is clamped to the spindle **18** via its end in a shape of the shank **16** of the body using the spindle opening **22** for a bolt. Obviously other forms of the body **3** ending are possible according to the dispositions of the spindle **18**, e.g. Morse taper, steep ISO taper, etc.

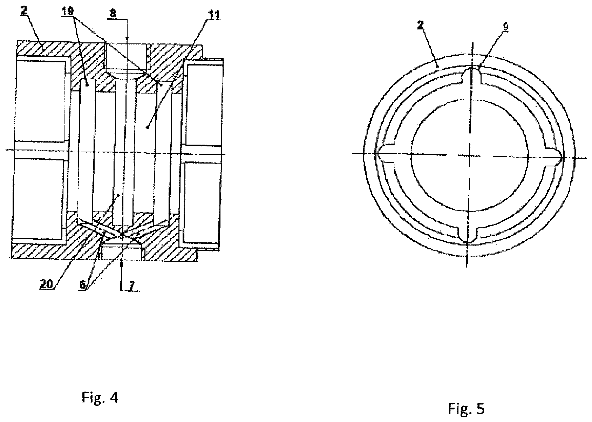

The process liquid supply port **8** and air supply port **7** are connected with the cavity **11** of the socket **2**. Air supply channels **6** and annular air supply grooves **19** in the cavity **11** of the socket **2** are parts of the pressure relief circuit, which is further described in more detail with reference to Fig. 4. The socket **2** has recesses **9** at four places, which are part of the bypass vent circuit. A detail of the bypass embodiment is shown in Fig. 5. During the operation of the clamping device **17** with a supply of process liquids to the drill body for deep holes according to the present invention only the body **3** is rotating, with drill **10** for deep holes clamped. The socket **2** is non-rotational. The resistance created by the socket **2** connecting to the air supply port **7** and process liquid supply port **8** during the rotation of the socket **2** will be enough to prevent accidental rotation due to the friction of the bearings **4**. Process liquid is delivered to the machining place by the process liquid supply port **8** through the groove **20** for the process liquid supply and through the cavity **11** of the socket **2**, radial channel **12**, axial channel **13**, and the internal channel **14** of the drill **10** for deep holes.

In Fig. 4 a detail of the cavity **11** of the socket **2** with the process liquid supply port **8** is shown, the longitudinal section being taken the one annular process liquid supply groove **20**, air supply port **7**, two annular air supply grooves **19**, and air supply channels **6**. The air supply channels **6** and the air supply grooves **19** are parts of the pressure relief circuit, which is responsible for maintaining the required backlash between the socket **2** and the body **3** for smooth rotation of these parts as well as for directing the process liquid to the annular process liquid supply groove **20** in the cavity **11** of the socket **2** for further direction of process liquid to the channel system so as to prevent the accidental leak of process liquid through the annular air supply grooves **10** in the cavity **11** of the socket **2** to the bearings **4**.

Fig. 5 illustrates a detail on the socket **2** from Figs. 2 to 4, in which four recesses **9** can be seen, which are created on both sides of the socket **2** in the direction of the bearings **4**. These recesses **9** are parts of the bypass vent circuit via which the excess air, which may cause problems during the leak of process liquid from the annular process liquid supply groove **20** to the cavity **11** of the socket **2** and further to the channels **12** and **13**, is removed. This excess air is thus removed through the recess **9** of the socket **2** via the space between the socket **2** and the bearings **4** and further through the channels **21** outside the socket **2**.

### Industrial Applicability

The clamping device for the supply of process liquids to a body of a drill is designed for the field of mechanical engineering, especially for the special needs of deep hole drilling process. The clamping device according to the invention may be applied in all machine types with horizontal rotation axis without the need of intervention into their structure.

### List of Reference Numbers

- 1 -: cover
- 2 -: socket
- 3 -: body
- 4 -: bearing
- 5 -: seal ring
- 6 -: air supply channels
- 7 -: air supply port
- 8 -: process liquid supply port
- 9 -: recess
- 10 -: drill
- 11 -: cavity of the socket
- 12 -: radial channel
- 13 -: axial channel
- 14 -: internal channel
- 15 -: clamping hole
- 16 -: shank
- 17 -: clamping device
- 18 -: spindle
- 19 -: annular air supply groove
- 20 -: annular process liquid supply groove
- 21 -: venting channels
- 22 -: bolt opening in the spindle
- 23 -: drill retaining cavity

## Claims

1. A clamping device (17) for the supply of process liquids to a body of a drill, the clamping device (17) consisting of a body, provided at one end with a drill retaining cavity (23) and at least one clamping hole (15) in the body (3) for a screw for clamping of a drill (10), and at the other end provided with a shank for the clamping of the clamping device (17) to a machine tool spindle, wherein the body (3) is rotatably arranged in a cavity (11) of a socket (2) and fixed in the axial direction via a cover (1) using bearings (4), wherein the socket (2) comprises a process liquid supply port (8) connected to an annular process liquid supply groove (20) created on the inner side of the socket (2), facing which a radial channel (12) is created in the body (3), the radial channel (12) being connected to the annular process liquid supply groove (20) to which radial channel (12) an axial channel (13) arranged on the axis of the clamping device is connected, the axial channel (13) being connected with the drill retaining cavity (23), **characterized in that** the socket (2) comprises an air supply port (7) connected via channels (6) to two annular air supply grooves (19) created on the inner side of the socket (2), which are arranged between the bearings (4) and on the both sides of the annular process liquid supply groove (20) and **in that** around each bearing (4) in the socket (2) at least one recess (9) is created, which is connected with a radial venting channel (21) for the removal of the excess air from the cavity (11) of the socket (2).

2. The clamping device according to claim 1 **characterized in that** the process liquid supply port (8) and air supply port (7) are arranged in the socket (2) so as to be diametrically opposite each other.

## Patentansprüche

1. Eine Klemmvorrichtung (17) zum Zuführen von Prozessflüssigkeiten zu einem Körper eines Bohrers, wobei die Klemmvorrichtung (17) aus einem Körper besteht, der an einem Ende mit einem Bohrerhaltehohlraum (23) und mindestens ein Klemmloch (15) in dem Körper (3) für eine Schraube zum Klemmen eines Bohrers (10) versehen ist und an dem anderen Ende mit einem Schaft zum Klemmen der Klemmvorrichtung (17) mit einer Werkzeugmaschinenspindel versehen ist, wobei der Körper (3) in einem Hohlraum (11) einer Muffe (2) drehbar angeordnet ist und über eine Abdeckung (1) mittels Lager (4) in axialer Richtung fixiert ist, wobei die Muffe (2) eine Prozessflüssigkeitszufuhranschluss (8) umfasst, die mit einer ringförmigen Prozessflüssigkeitszufuhrnut (20) verbunden ist, die auf der Innenseite der Muffe (2) erzeugt ist, gegenüber der ein Radialkanal (12) in dem Körper (3) ausgebildet ist, wobei der Radialkanal (12) mit der ringförmigen Prozessflüssigkeitszufuhrnut (20) verbunden ist, wobei mit dem Radialkanal (12) ein Achskanal (13) verbunden ist, der auf der Achse der Klemmvorrichtung angeordnet ist, wobei der Axialkanal (13) mit dem Bohrerhaltehohlraum (23) verbunden ist, **dadurch gekennzeichnet, dass** die Muffe (2) einen Luftzufuhranschluss (7) umfasst, der über Kanäle (6) mit zwei ringförmigen Luftzufuhrnuten (19) verbunden ist, die zwischen den Lagern (4) und auf beiden Seiten der ringförmigen Prozessflüssigkeitszufuhrnut (20) angeordnet sind, und dass um jedes Lager (4) in der Muffe (2) mindestens eine Aussparung (9) ausgebildet ist, die mit einem radialen Entlüftungskanal (21) zur Abfuhr der überschüssigen Luft aus dem Hohlraum (11) der Muffe (2) verbunden ist.

2. Die Klemmvorrichtung nach Anspruch 1, **dadurch gekennzeichnet, dass** die Prozessflüssigkeitszufuhranschluss (8) und die Luftzufuhranschluss (7) diametral gegenüberliegend in der Muffe (2) angeordnet sind.

## Revendications

1. Un dispositif de serrage (17) pour l'amenée de liquides de traitement à un corps d'un foret, où le dispositif de serrage (17) est constitué d'un corps, pourvu à une extrémité d'une cavité de retenue de foret (23) et au moins un trou de serrage (15) dans le corps (3) pour une vis pour le serrage d'un foret (10), et à l'autre extrémité pourvu d'une tige pour le serrage du dispositif de serrage (17) à une broche d'outil de machine, où le corps (3) est disposé de manière rotative dans une cavité (11) d'une douille (2) et fixé dans la direction axiale par l'intermédiaire d'un couvercle (1) à l'aide de paliers (4), où la douille (2) comprend un orifice d'alimentation en liquide de traitement (8) relié à une rainure d'alimentation en liquide de traitement annulaire (20) formée sur le côté interne de la douille (2), faisant face à laquelle un canal radial (12) est formé dans le corps (3), où le canal radial (12) est relié à la rainure d'alimentation en liquide de traitement annulaire (20), auquel canal radial (12) est relié un canal axial (13) disposé sur l'axe du dispositif de serrage, où le canal axial (13) est relié à la cavité de retenue de foret (23), **caractérisé en ce que** la douille (2) comprend un orifice d'alimentation en air (7) relié par des canaux (6) à deux rainures d'alimentation en air annulaires (19) formées sur le côté intérieur de la douille (2), qui sont disposées entre les paliers (4) et sur les deux côtés de la rainure d'alimentation en liquide de traitement annulaire (20), et **en ce que** autour de chaque palier (4) dans la douille (2) au moins un enfoncement (9) est formé, qui est relié à un canal d'aération radial (21) pour l'évacuation de l'excès d'air de la cavité (11) de la douille (2).

2. Le dispositif de serrage selon la revendication 1, **caractérisé en ce que** l'orifice d'alimentation en liquide de traitement (8) et l'orifice d'alimentation en air (7) sont disposés dans la douille (2) de manière à être diamétralement opposés l'un à l'autre.
